# EUROPEAN PATENT APPLICATION

(11) **EP 1 609 539 A2**
(43) Date of publication of application: **28.12.2005**
(21) Application number: 05012504.6
(22) Date of filing: 10.06.2005
(51) Int. Cl.: B05D 7/14, C08G 18/08, C08G 18/80, C09D 175/04

(54) **Method for coating coils**

(30) Priority: 23.06.2004 US 874873
(71) Applicant: Bayer MaterialScience LLC, Pittsburgh PA 15205 (US)
(72) Inventor: Yu, Polli C., Wexford, PA 15090 (US); Clatty, Jan L., Moon Twp., PA 15090 (US); Horgan, Sylvie S., Slippery Rock, PA 16057 (US); Wellman, Michael T., Moundsville, WV 26041 (US); McCalmon, Donald L., Pittsburgh, PA 15237 (US)
(74) Representative: Klimiuk, Meike

(57) **Abstract**

A method of coil coating a metal strip that includes applying to the metal strip, a coating composition that includes a binder containing a) a polyol component, which is soluble or dispersible in water; and b) a polyisocyanate component, which is soluble or dispersible in water and has blocked isocyanate groups. Metal substrates coated according to the method can be used to make articles.

## Description

### BACKGROUND OF THE INVENTION

### 1. Field of the Invention

The present invention relates to a method of coating metal substrates by using the coil process with a polyurethane coating.

### 2. Description of the Prior Art

It is common practice in the metal sheet processing industry to make flat products with metallic coverings and/or organic coatings. Advances in plant technology, in the materials field and in processing methodology have advanced the changeover from piece treatment to the pretreatment and/or coating of metal sheets. The evermore complex requirements made of the materials have led to a need to combine the advantages of the substrate material, steel--for example, strength, shapability and weldability--with specific new properties, such as corrosion resistance and decorative appearance while minimizing overall cost.

The fields of use for such metal sheets, produced by methods generally referred to as coil coating are very diverse. As an example, in the architectural area, there are numerous applications. Coated metal sheets are also used in interior construction, such as for walls, furniture, lamps and domestic electrical appliances. There is also an increasing range of applications in vehicle manufacture. For example, truck bodies and "bolt-on" automotive parts are often manufactured from precoated materials. In many instances mini-van and motor home bodies are produced from coated metal sheets.

Based on such a broad set of end uses, many diverse requirements are made of the coatings applied to the metal sheets. In particular, great flexibility and shapability must be combined with outstanding adhesion by the coating. This is required in particular when the coated material has to be arched at small radii, as when producing car bodies, for example.

At the same time it is necessary to offer a material for further processing which meets the most stringent requirements: thickness, shade, surface quality, and behavior under load. These properties must also be retained when bending and cutting the materials.

Additionally, there is a growing need to utilize coating compositions that do not contain, or minimize the content of solvents or other volatile organic compounds (VOC) for environmental reasons. Thus, water has become an increasingly favorable carrier liquid in coating compositions for coil coating, however, the use of such compositions have been limited because they typically do not cure and/or dry within the short timeframes required in coil coating operations.

U.S. Patent No. 4,103,050 discloses a heat-curable aqueous coil coating primer for priming metal coil that contains a film-forming binder phase including a heat-curable, water-dispersible polyurethane polymer, and a thermosetting or thermoplastic resinous latex and a pigment phase which includes corrosion-inhibiting pigment and, optionally, an opacifying pigment.

U.S. Patent 5,084,304 discloses a process for coating metal strips by a coil coating process. The coating materials include polyesterimides, polyamidocarboxylic acids, polyamidimides, polyhydantoins and/or polybismaleimides, pigments and/or fillers, suitable auxiliary substances and additives as well as solvents or solvent mixtures.

U.S. Patent No. 5,723,536 discloses novel aqueous or water-dilutable blocked polyisocyanates their use for the production of onecomponent polyurethane coating compositions, which are stovable at relatively low temperatures.

U.S. Patent No. 5,852,106 discloses aqueous polyurethane coating compositions where the binder contains a polyol component, an isocyanate-reactive component, and a polyisocyanate component. The polyol component is soluble or dispersible in water. The isocyanate-reactive component contains at least one group capable of salt formation. The polyisocyanate component is soluble or dispersible in water and has blocked isocyanate groups. The coating compositions are used for coating glass surfaces, especially glass bottles.

U.S. Patent No. 6,413,642 discloses a method of coating metal substrates that includes cleaning the metal surface, applying an organic and/or inorganic pretreatment composition, applying a primer, and applying a coating material. The coating material contains an amine-modified epoxy resin and a crosslinking agent suitable for crosslinking.

U.S. Patent No. 6,599,965 discloses a coating composition for use with metallic substrates. The coating composition contains a polyurethane or epoxy/amine film-forming component, and a corrosion protection component.

As indicated above, there is a need in the art of coil coating for aqueous based coil coating compositions that can provide excellent coating properties and which are capable of being applied economically, i.e., within the confines of desirable manufacturing practice.

### SUMMARY OF THE INVENTION

The present invention is directed to a method of coil coating a metal strip that includes applying to the metal strip, a coating composition that includes a binder containing a) a polyol component, which is soluble or dispersible in water; and b) a polyisocyanate component, which is soluble or dispersible in water and has blocked isocyanate groups.

The present invention is also directed to a metal substrate coated according to the above described method as well as to articles that include the coated metal substrates.

Additionally, the present invention provides an article that includes a first metal substrate and a second metal substrate, both made according to the above described method, and positioned such that the coated surfaces of each substrate are parallel to and opposite each other, where a reaction injection molding (RIM) composition is placed there between by a RIM process.

### DESCRIPTION OF THE DRAWINGS

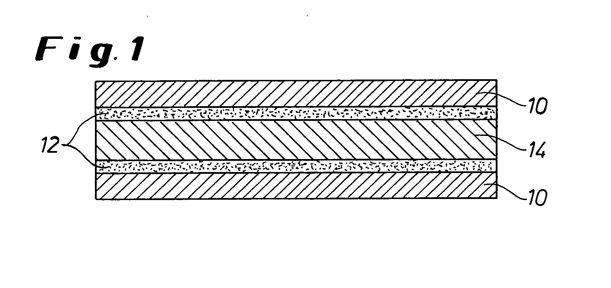

FIG. 1 shows an article according to the present invention.

### DETAILED DESCRIPTION OF THE INVENTION

Other than in the operating examples, or where otherwise indicated, all numbers or expressions referring to quantities of ingredients, reaction conditions, etc. used in the specification and claims are to be understood as modified in all instances by the term "about."

As used herein, molecular weights (Mn and Mw) are determined using gel permeation chromatography (GPC) with appropriate, typically, polystyrene or sulfonated polystyrene standards, and/or, when appropriate and when the molecular weight is sufficiently low, by calculation from the functional group content and functionality.

In the present invention, a metal strip is coil coated by applying a coating composition that includes a binder containing a) a polyol component, which is soluble or dispersible in water; and b) a polyisocyanate component, which is soluble or dispersible in water and has blocked isocyanate groups.

As indicated above, aqueous based coatings are not used in coil coating operations because they are typically too slow to dry/cure to be used in such operations. In the present invention, aqueous based coating compositions have been identified that dry/cure in a sufficiently short period of time at appropriate temperatures to be used in coil coating processes. Thus, a method is provided whereby metal strips can be coated in a coil coating process using a more environmentally and less toxic coating composition.

In an embodiment of the invention, the polyol component can be a polyhydroxyl compound containing urethane and/or ether groups, which are soluble or dispersible in water. The polyol can have a number average molecular weight (Mn as determined by GPC using appropriate standards) of at least 500, in some cases at least 1,000, and in other cases at least 2,000. The Mn of the polyol can be up to 100,000, in some cases up to 50,000, and in other cases up to 10,000. The Mn of the polyol can vary between any of the values recited above.

In this embodiment, the polyols can be any polyol known from polyurethane coating chemistry, provided that the polyol contain sufficient hydrophilic groups, in some particular embodiments, polyether moieties containing ethylene oxide units and/or carboxylate groups, to provide for their solubility or dispersibility in water. It is also possible to use blends of polyols which are not sufficiently hydrophilic for this purpose in admixture with external emulsifiers.

In a particular embodiment, the polyol in a) includes the reaction product of a polyisocyanate component and a polyol component containing one or more polyether polyols and having an OH number of 25 to 350, in some cases 35 to 300, and in other cases 50 to 250 mg KOH/g solids,

In a more particular embodiment of the invention, the polyol in a) includes the reaction product of a polyisocyanate component containing 50 to 100 wt. % of 4,4'-diisocyanatodicyclohexylmethane, a polyol component containing one or more polyether polyols and having an OH number of 25 to 350, in some cases 35 to 300, and in other cases 50 to 250 mg KOH/g and an isocyanate-reactive component containing at least one group capable of salt formation.

In a further particular embodiment of the invention, the binder includes a polyol component, which is the reaction product of or includes one or more of components A1) through H1):
A1 ) 20 to 60 wt.%, in some cases 30 to 50 wt.% of a polyisocyanate component containing 50 to 100 wt. % of 4,4'-diisocyanatodicyclohexylmethane and 0 to 50 wt. % of other organic polyisocyanates having a molecular weight of 140 to 1500,
B1) 20 to 60 wt.%, in some cases 30 to 50 wt.% of a polyol component containing one or more polyether polyols and having an OH number of 25 to 350 mg KOH/g solids,
C1) 2 to 12 wt.%, in some cases 3 to 10 wt.% of an anionic or potential anionic component containing one or more compounds having at least one isocyanate-reactive group and at least one group capable of salt formation, which may optionally be present in at least partially neutralized form,
D1) 0 to 12 wt.%, in some cases 0 to 8 wt.% of a nonionic hydrophilic component containing one or more compounds which are mono- or difunctional for purposes of the isocyanate addition reaction and have at least one lateral or terminal hydrophilic polyether chain,
E1) 0 to 15 wt.%, in some cases 0 to 10 wt.% of one or more polyhydric alcohols having 2 to 4 hydroxyl groups and a molecular weight of 62 to 250,
F1) 0 to 15 wt.%, in some cases 0 to 10 wt.% of one or more (cyclo)aliphatic polyamines having 2 to 4 amino groups and a molecular weight of 60 to 300,
G1) 0 to 30 wt.%, in some cases 0 to 20 wt.% of one or more (cyclo)aliphatic polyamino /hydroxyl compounds having a total of 2 to 4 hydroxyl and amino groups and a molecular weight of 61 to 300, and
H1) 0 to 15 wt.%, in some cases 0 to 10 wt.% of one or more stabilizing components which are mono- or difunctional for purposes of the isocyanate addition reaction and have 1 to 2 hydrazide groups and a molecular weight of 70 to 300,

The percentages of A1 ) to H1 ) add up to 100 and are based on the weight of the polyol component a).

Component A1 ) can be selected from organic polyisocyanates having a molecular weight of 140 to 1500, in some cases 168 to 318, provided that 50 to 100, in some cases 75 to 100 and in other cases 100 wt. % of component A1 ) can include one or more of 4,4'-diisocyanatocyclohexylmethane (HMDI), hexamethylene diisocyanate (HDI), 1-isocyanato-3,3,5-trimethyl-5-isocyanatomethyl-cyclohexane (IPDI), 2,4- and/or 2,6-diisocyanatotoluene (TDI), 1-methyl-2,4- and/or -2,6-diisocyanatocyclo-hexane and 4,4'-diisocyanatodiphenylmethane (MDI). Polyisocyanate component A1 ) may also contain known lacquer polyisocyanates based on HDI, IPDI and/or TDI. In a particular embodiment, component A1) includes 4,4'-diisocyanatocyclohexylmethane (HMDI).

Component B1) can be selected from relatively high molecular weight polyhydroxy polyethers having a Mn of 300 to 5,000, in some cases 500 to 3,000, which are known from polyurethane chemistry. Examples include, but are not limited to, polymers or copolymers of tetrahydrofuran, styrene oxide, propylene oxide, ethylene oxide, butylene oxides or epichlorohydrin, in particular of propylene oxide and optionally ethylene oxide, which are produced from difunctional starter molecules, such as water, ethylene glycol, 1,2-propanediol, 1,3-propanediol, diethylene glycol, 1,4-butanediol, 1,6-hexanediol, 1,8-octanediol, neopentyl glycol, 2-methyl-1,3-propanediol, the bis-hydroxymethylcyclohexane isomers, 2,2-bis-(4-hydroxyphenyl)propane and amines containing two NH bonds. Ethylene oxide can optionally be used, provided that the resulting polyetherdiol contains at most 10 wt. % of ethylene oxide units. The polyetherdiols used can include those obtained without using ethylene oxide, and in some cases those obtained from propylene oxide and/or tetrahydrofuran.

In addition to the relatively high molecular weight difunctional compounds indicated above, component B1) can also contain trifunctional or higher functional polyhydroxyl compounds, in some cases polyetherpolyols, which are obtained from higher functional starting materials such as trimethylolpropane, glycerol or ethylenediamine.

In some embodiments, polyether polyamines obtained by converting the hydroxyl groups of the previously described polyether polyols into primary amino groups can be used. Such materials are available under the JEFFAMINE® from Hunstman inc., Austin, TX.

Component C1) can be selected from compounds containing anionic or potential anionic groups and having at least one isocyanate-reactive group. These compounds can be carboxylic acids containing at least one, in many cases one or two hydroxyl or amino groups, or salts of these amino- or hydroxycarboxylic acids. Suitable acids include 2,2-bis(hydroxymethyl)alkane-carboxylic acids (such as dimethylolacetic acid, 2,2-dimethylolpropionic acid, 2,2-dimethylolbutyric acid or 2,2-dimethylolpentanoic acid), dihydroxysuccinic acid, hydroxypivalic acid and mixtures of these acids. Dimethylolpropionic acid and/or hydroxypivalic acid are used as component C1) in many cases. It is also possible, to use sulfonate diols which may optionally contain ether groups as described in U.S. Pat. No. 4,108,814, the pertinent portions of which are herein incorporated by reference. as anionic structural component C1).

The free acid groups, in particular carboxyl groups, are considered to be potential anionic groups, while the salt groups, in particular carboxylate groups, obtained by neutralization of the acids with bases are considered to be anionic groups.

Optional components D1) are selected from nonionic hydrophilic compounds containing one or two isocyanate-reactive groups, in particular hydroxyl or amino groups. In some instances, at least 80 wt. % of the polyether chains present in these compounds are ethylene oxide units. Propylene oxide units can also be present. Suitable nonionic hydrophilic compounds include monofunctional polyethylene glycol monoalkyl ethers having Mn of 350 to 5,000 such as BREOX® 350, 550 and 750 from BP Chemicals. Also suitable are the monofunctional compounds having one isocyanate-reactive group and hydrophilic chains containing ethylene oxide units as described, for example, in U.S. Patent No. 4,237,264 the pertinent portions of which are herein incorporated by reference.

Diisocyanates and/or compounds containing two isocyanate-reactive groups, which also contain hydrophilic chains containing lateral ethylene oxide units, such as those described in U.S. Patent No. 4,092,286, the pertinent portions of which are herein incorporated by reference, are also suitable for use as component D1).

Optional components E1) are selected from compounds having 2 to 4 hydroxyl groups and a molecular weight of from 62 to 250. Examples include, but are not limited to, ethylene glycol, propylene glycol, 1,4-butanediol, 1,6-hexanediol, glycerol, trimethylolpropane, trimethylolethane, hexanetriol isomers and pentaerythritol.

Optional components F1) are selected compounds having 2 to 4 amino groups and a molecular weight of from 60 to 300. Examples include, but are not limited to ethylenediamine, 1,2- and 1,3-diaminopropane, 1,6-diaminohexane, 1,3-diamino-2,2-dimethyl-propane, isophoronediamine, 1,3- and 1,4-diamino-hexane, 4,4'-diaminodicyclohexylmethane, 2,4- and/or 2,6-diamino- 1 -methylcyclohexane, 4,4'-diamino-3,3'-dimethyldicyclohexylmethane, 1,4-bis-(2-aminoprop-2-yl)cyclohexane, hydrazine, hydrazides and mixtures of diamines and/or hydrazines; higher functional polyamines such as diethylenetriamine, triethylenetetramine, dipropylenetriamine, tripropylene-tetramine and hydrogenated addition products of acrylonitrile onto aliphatic or cycloaliphatic diamines, in many cases corresponding addition compounds of an acrylonitrile group onto a diamine, such as hexamethylenepropylenetriamine, tetramethylenepropylenetriamine, isophoronepropylenetriamine, 1,4- or 1,3-cyclohexanepropylenetriamine and mixtures of these polyamines.

Optional components G1) are selected from compounds having a molecular weight of from 60 to 300 and containing 2 to 4 amino groups and hydroxyl groups, non-limiting examples being ethanolamine, diethanolamine, triethanolamine and hydroxyethyl-ethylenediamine.

Optional components H1) are selected from mono- and/or difunctional carboxylic acid hydrazides having a molecular weight of from 70 to 300. Non-limiting examples of suitable components H1) include, but are not limited to adipic acid dihydrazide, benzoic acid hydrazide, p-hydroxybenzoic acid hydrazide, isomeric terephthalic acid hydrazides, N-2,2,6,6-tetramethyl-4-piperidinyl-N-aminooxamide (LUCHEM® HA-R 100, Elf Atochem), 3-(4-hydroxy-3,5-di-t.-butylphenyl)propionic acid hydrazide, 2-hydroxy-3-t.-butyl-5-methylphenylacetic acid hydrazide or mixtures of these compounds. Other effective hydrazides include addition products prepared from cyclic carbonates and hydrazine as are described in U.S. Patent Nos. 5,523,377 and 5,596,064, the pertinent portions of which are herein incorporated by reference. Non-limiting examples include the addition products of 1 mole of hydrazine and 1 mole of propylene carbonate and 1 mole of hydrazine and 2 moles of propylene carbonate. In some embodiments, the stabilizers are adipic acid dihydrazide and N-2,2,6,6-tetramethyl-4-piperidinyl-N-aminooxamide.

The above-described hydroxyl-functional polyether polyurethanes as the polyol a) are produced in known manner from starting components A1 ) to H1 ) in one or more stages. The amounts of the reactants are selected such that the equivalent ratio of isocyanate groups of component A1) to isocyanate-reactive groups of components B1), C1), D1), E1), F1), G1) and H1) is 0.8:1 to 2:1, in some cases 0.95:1 to 1.5:1 and in other cases 0.95:1 to 1.2:1.

Neither the carboxyl groups of component C1), the water used to prepare the solutions or dispersions of the polyurethanes nor the neutralizing agent used to neutralize the carboxyl groups are included in the calculation of the equivalent ratio.

In an embodiment of the invention, component E1) is used in an amount of 0 to 75 wt. %, in some cases 0 to 70 wt. %, based on the weight of component B1).

In another embodiment of the invention, component D1) is used in an amount such that 0 to 30, in many cases 0 to 20 wt. % of ethylene oxide units are incorporated within terminally and/or laterally arranged polyether chains present in the polyurethanes ultimately obtained according to the invention.

In a further embodiment of the invention, the quantity of component C1) and the degree of neutralization of the carboxyl groups incorporated with component C1) are calculated such that 0.1 to 120, in some cases 1 to 80 milliequivalents of carboxyl groups are present per 100 g of solids in the ultimately obtained polyurethane, provided that the total quantity of ethylene oxide units and carboxylate groups is sufficient to ensure the solubility or dispersibility of the polyurethanes in water.

The nature and quantity ratios of starting components A1) to H1) can also be calculated such that the resulting polyurethanes contain a maximum of 15, in some cases a maximum of 10 wt. % of unreacted hydroxyl groups, based on resin solids.

Starting components A1) to H1) may be reacted in one or more stages. A solvent, which is inert towards isocyanate groups, may also be used such that the reaction products are obtained in the form of a solution in such a solvent. In this connection, "solution" means both a true solution and a water-in-oil emulsion, which may occur, for example, if some of the structural components are used in the form of aqueous solutions. Suitable solvents include acetone, methyl ethyl ketone, N-methylpyrrolidone and mixtures of these and/or other solvents. These solvents are typically present in an amount sufficient to provide at least 10 wt. % solutions of the reaction products prepared from starting components A1) to H1).

The OH-functional polyether polyurethanes as polyol a) can be produced in the absence or presence of catalysts. Suitable catalysts are known and include those conventionally used in polyurethane chemistry. Examples include tertiary amines such as triethylamine; and tin compounds such as tin(II) octoate, dibutyltin oxide and dibutyltin dilaurate.

Suitable processes for the production of the polyurethane polyurea dispersions or solutions according to the invention are known and include those described in U.S. Patent No. 5,852,106, the pertinent portions of which are herein incorporated by reference.

In an embodiment of the invention, hydroxyl groups can be introduced by reacting an NCO prepolymer with excess E1) or G1). If the process is performed in a solvent, these components can be added to the prepolymer. In a solvent-free melt process, in which at most small quantities of co-solvents are used, the components can be added to the prepolymer only if OH-functional structural units are used. When components containing amino groups are used, they should be slowly added into the dispersion water or a proportion of the dispersion water, optionally in the presence of a co-solvent, in order to keep the exothermic reaction under control.

In an embodiment of the invention, the base necessary for at least partially neutralizing the carboxyl groups can be added before, during or after the addition of water. Suitable bases include, but are not limited to ammonia, N-methylmorpholine, dimethyl-isopropanolamine, triethylamine, dimethylethanolamine, methyldiethanol-amine, tri ethanolamine, morpholine, tripropylamine, ethanolamine, triisopropanolamine, 2-diethylamino-2-methyl-1-propanol and mixtures of these and/or other neutralizing agents. Sodium hydroxide, lithium hydroxide and potassium hydroxide are also suitable as neutralizing agents. Ammonia and dimethylethanolamine are used in many cases as neutralizing agents.

In another embodiment of the invention, the amount of water used is selected such that the resulting solutions or dispersions have a solids content of 10 to 60, in some cases 20 to 45 wt. %. Once the water has been added, any co-solvent may optionally be removed by distillation. The polyurethanes according to the invention are ultimately obtained in the form of aqueous solutions or aqueous dispersions. Whether aqueous solutions or dispersions are obtained is primarily determined by the concentration of the hydrophilic segments.

In an embodiment of the invention, the blocked polyisocyanate b) includes the reaction product of a polyisocyanate having an isocyanurate group content of 2 to 30 wt. %, a reversible, monofunctional blocking agent for isocyanate groups, a nonionic hydrophilic component and a stabilizing component which has 1 to 2 hydrazide groups and a molecular weight of 70 to 300.

In a particular embodiment of the invention, the blocked polyisocyanate in b) includes a water dispersed blocked polyisocyanate, a non-limiting example of such being BAYHYDUR® VP LS 2240, available from Bayer Polymers LLC, Pittsburgh, PA.

In an embodiment of the invention, the binder includes a blocked polyisocyanate component b), which can be the reaction product of the following components:
A2) 40 to 80 wt.%, in some case 50 to 70 wt.% of a polyisocyanate having an isocyanurate group content (calculated as C₃N₃O₃; molecular weight=126) of 2 to 30 wt.% and prepared from one or more diisocyanates having a molecular weight of 140 to 350 with
B2) 5 to 30 wt.%, in some cases 10 to 20 wt.% of one or more reversible blocking agents for isocyanate groups which are monofunctional for purposes of the isocyanate addition reaction,
C2) 0 to 15 wt.%, in some cases 0 to 10 wt.% of an anionic or potential anionic component containing one or more compounds having at least one isocyanate-reactive group and at least one group capable of salt formation, which may optionally be present in at least partially neutralized form,
D2) 5 to 30 wt.%, in some cases 10 to 20 wt.% of a nonionic hydrophilic component containing one or more compounds which are mono- or difunctional for purposes of the isocyanate addition reaction and have at least one lateral or terminal hydrophilic polyether chain,
E2) 0 to 15 wt.%, in some cases 0 to 10 wt.% of one or more polyhydric alcohols having 2 to 4 hydroxyl groups and a molecular weight of 62 to 250,
F2) 0 to 15 wt.%, in some cases 0 to 10 wt.% of one or more (cyclo)aliphatic polyamines having 2 to 4 amino groups and a molecular weight (Mn) of 60 to 300 and
G2) 0.5 to 15 wt.%, in some cases 1 to 10 wt.% of one or more stabilizing components which are mono- or difunctional for purposes of the isocyanate addition reaction and have 1 to 2 hydrazide groups and a molecular weight of 70 to 300.

Component A2) can be selected from organic polyisocyanates having an isocyanurate group content (calculated as C₃N₃O₃, molecular weight=126) of 2 to 30 wt.%, in some cases 5 to 20 wt.%, and in other cases at least 5 wt.%, and prepared from diisocyanates having a molecular weight of 140 to 350. Diisocyanates which may be used include, but are not limited to 4,4'-diisocyanatodicyclohexyl-methane (DESMODUR® W, Bayer AG), 1-isocyanato-3,3,5-trimethyl-5-isocyanatomethylcyclohexane (IPDI), 1,6-diisocyanatohexane (HDI) and mixtures of these polyisocyanates. Polyisocyanate component A2) is prepared from the diisocyanates using known methods, as a non-limiting example those described in EP-A 649,866.

Oximes and/or pyrazoles can be used as the monofunctional blocking agents B2). Other blocking agents that can be used include butanone oxime, 3,5-dimethylpyrazole, ε-caprolactam, 1,2,4-triazole, diisopropylamine, malonic acid ethylester, acetic acid ethylester, and/or t-butyl benzylamine.

Component C2) can be selected from compounds containing anionic or potentially anionic groups having at least one isocyanate-reactive group. In an embodiment of the invention, these compounds can include at least one carboxylic acid and one or two hydroxyl groups, or salts of these hydroxycarboxylic acids. Suitable acids include, but are not limited to 2,2-bis(hydroxymethyl)-alkanecarboxylic acids (such as dimethylolacetic acid, 2,2-dimethylol-propionic acid, 2,2-dimethylolbutyric acid or 2,2-dimethylolpentanoic acid), dihydroxysuccinic acid, hydroxypivalic acid and mixtures of these acids. In a particular embodiment, dimethylolpropionic acid and/or hydroxypivalic acid are used as component C2).

The free acid groups, in particular carboxyl groups, are considered to be potential anionic groups, while the salt groups, in particular carboxylate groups, obtained by neutralization of the acids with bases are considered to be anionic groups.

Optional components D2) can be selected from nonionic hydrophilic compounds containing one or two isocyanate-reactive groups, in particular hydroxyl or amino groups. Typically, at least 80 wt. %, in some cases 100 wt.%, of the polyether chains present in these compounds are ethylene oxide units. Propylene oxide units can also be present. Suitable nonionic hydrophilic compounds include monofunctional polyethylene glycol monoalkyl ethers having a Mn of 350 to 5,000, in some cases 600 to 900, such as BREOX® 350, 550 and 750 from BP Chemicals.

Optional components E2) can be selected from compounds having 2 to 4 hydroxyl groups and a molecular weight of 62 to 250. Non-limiting examples include ethylene glycol, propylene glycol, 1,4-butanediol, 1,6-hexanediol, glycerol, trimethylolpropane, trimethylolethane, hexanetriol isomers, pentaerythritol and mixtures of these compounds.

Optional components F2) can be selected from compounds having 2 to 4 amino groups and a molecular weight of 60 to 300. Non-limiting examples include ethylenediamine, 1,2- and 1,3-diaminopropane, 1,6-diaminohexane, 1,3-diamino-2,2-dimethylpropane, 1-amino-3,3,5-trimethyl-5-amino-methylcyclohexane (IPDA), 1,3- and 1,4-diaminohexane, 4,4'-diaminodicyclohexylmethane, 2,4- and 2,6-diamino-1-methylcyclohexane, 4,4'-diamino-3,3'-dimethyldicyclohexylmethane, 1,4-bis-(2-aminoprop-2-yl)cyclohexane and mixtures of these compounds.

Component G2) can be selected from mono- and/or difunctional carboxylic acid hydrazides having a molecular weight of 70 to 300. Non-limiting examples include adipic acid dihydrazide, benzoic acid hydrazide, p-hydroxybenzoic acid hydrazide, isomeric terephthalic acid hydrazides, N-2,2,6,6-tetramethyl-4-piperidinyl-N-aminooxamide (Luchem HA-R 100, Elf Atochem), 3-(4-hydroxy-3,5-di-t.-butylphenyl)propionic acid hydrazide, 2-hydroxy-3-t.-butyl-5-methylphenylacetic acid hydrazide and mixtures of these compounds. Other effective hydrazides are addition products prepared from cyclic carbonates and hydrazine, for example from 1 mole of hydrazine and 1 or two moles of propylene carbonate, as described in U.S. Patent Nos. 5,523,377and 5,596,064, the pertinent portions of which are herein incorporated by reference. In a particular embodiment, the stabilizers can be adipic acid hydrazide and N-2,2,6,6-tetramethyl-4-piperidinyl-N-aminooxamide.

Blocked polyisocyanate component b) can be produced from starting components A2) to G2) in multiple stages. The amounts of the reactants are selected such that the equivalent ratio of isocyanate groups of component A2) to isocyanate-reactive groups of components B2), C2), D2), E2), F2) and G2) is 1:0.8 to 1:1.2, in some cases 1:09 to 1:1. Neither the carboxyl groups of component C2), the water used to prepare the solutions or dispersions of the polyurethanes nor the neutralizing agent used to neutralize the carboxyl groups are included in the calculation of this equivalent ratio.

In an embodiment of the invention, component D2) is used in a quantity such that 0.1 to 10, in many cases 0.5 to 3 wt. % of ethylene oxide units (calculated as C₂H₄O, molecular weight=44) are incorporated within terminal and/or lateral polyether chains in the blocked polyisocyanates b) according to the invention.

In an embodiment of the invention, the quantity of component C2) is calculated such that 0.1 to 1.5, in some cases 0.5 to 0.7 wt.% of chemically incorporated carboxyl groups (calculated as COOH, molecular weight=45) are present in the blocked polyisocyanate b), provided that the total quantity of ethylene oxide units and carboxylate groups is sufficient to ensure the solubility or dispersibility of the blocked polyisocyanates in water.

In an embodiment of the invention, component G2) is present in an amount such that 0.1 to 3.0, in some cases 0.1 to 1.0 wt.%, of chemically incorporated hydrazide groups (calculated as HN-NH, molecular weight=30) are present in blocked polyisocyanates b).

In the first stage of the production process, hydrophilic components C2) and D2) are introduced into a vessel and reacted with polyisocyanate component A2) at a temperature of 80 to 100°C, in some cases at 90°C, until the hydrophilic components are incorporated into the polyisocyanate. The reaction mixture is then cooled to 70°C and blocking agent B2) is incrementally added and reacted until the theoretically calculated NCO value is obtained. The temperature should not exceed 80°C during the reaction.

In the second stage, stabilizing component G2) is incorporated before or during the dispersion operation. Optionally, components E2) and F2) are dissolved in water and the reaction mixture is dispersed in this solution with thorough stirring. The amount of water used is selected such that the resulting solutions or dispersions have a solids content of 20 to 50 wt. %, in many cases 30 to 40%.

The base necessary for at least partially neutralizing the carboxyl groups can be added before, during or after the dispersion stage. Suitable bases include ammonia, N-methylmorpholine, dimethylisopropanolamine, triethylamine, dimethylethanolamine, methyldiethanolamine, triethanolamine, morpholine, tripropylamine, ethanol, triisopropanolamine, 2-diethylamino-2-methyl-1-propanol and mixtures of these and/or other neutralizing agents. Sodium hydroxide, lithium hydroxide and potassium hydroxide are also suitable, as neutralizing agents. Dimethylethanolamine is used in many cases as a neutralizing agent.

The coating compositions according to the invention are produced by blending polyol component a), which is soluble or dispersible in water, with the blocked polyisocyanate component b), which is soluble or dispersible in water, in known manner. Optionally, to the mixture of a) and b) suitable catalysts and/or flow control additives can be blended.

In another embodiment of the invention, the equivalent ratio of blocked isocyanate groups of component b) to hydroxyl groups of component a) can be from 0.8:1 to 3:1, in some cases from 0.8:1 to 2.5:1, and in other cases 0.9:1 to 2:1.

Suitable catalysts include, but are not limited to organotin-based systems, titanic acid esters, zinc salts, other suitable metal salts, and tertiary amines. Non-limiting examples of organotin-based systems include tin octoate, dibutyltin dilaurate, dibutyltin oxide, tin dioctoate, tin bis-(2-ethylhexanoate), dibutyl tin maleate, dibutyl tin diacetate, tin octylate, tin naphthenate, lead octylate, trimethylmethoxytin oxide, tributyltin toluenesulfonate, tributyltin methanesulfonate, and those disclosed in U.S. Patent No. 5,718,817. Non-limiting examples of titanic acid esters include tetrabutyl titanate, tetrapropyl titanate, tetraisopropyl titanate, and titanium tetraacetylacetonate. Non-limiting examples of zinc salts include zinc octoate, zinc chloride, zinc 2-ethylcaproate, and zinc acetylacetonate. Non-limiting examples of other metal salts include iron(III) chloride, ferric acetylacetonate, zirconium chelates, aluminum chelates, bismuth carbonates, bismuth carboxylates, and molybdenum glycolate Non-limiting examples of tertiary amines include salts of these compounds and carboxylates, such as triethylamine, 1,4-diazabicyclo-[2,2,2]-octane, 1,3-diazabicyclo(5,4,6) undecene-7, N,N-dimethylbenzylamine, N-methylmorpholine, 2,4,6-tris(dimethylaminomethyl) phenol, triethanolamine, pyridine, methylpyridine, benzyldimethylamine, N,N-endoethylenepiperazine, N-methylpiperidine, pentamethyldiethylenetriamine, N,N-dimethylaminocyclohexane, and N,N'-dimethylpiperazine.

Non-limiting examples of suitable flow control agents, that can be used in the present invention include polyacrylic esters, non-ionic fluorinated alkyl ester surfactants, non-ionic alkylarylpolyether alcohols, silicones, and the like, as well as those available under the trade name RESIFLOW® by Estron Chemical, Inc., Parsippany, NJ, those sold under the trade name Benzoin® by DSM, Inc., those available under the trade name MODAFLOW® from Monsanto and those available under the trade name SURFYNOL® available from Air Products, Bethlehem, PA.

In the present invention, the coating composition can be applied directly after a primer is applied.

Any suitable metal can be used as the metal strip in the present method. Suitable metals include, but are not limited to metals that contain aluminum (for example galvanized aluminum), zinc, iron (for example steel, and in particular cold rolled steel), and/or nickel.

In some embodiments of the invention, the surface of metal strips are pretreated. Suitable pretreatment compositions include, but are not limited to all of the organic and inorganic products known to the person skilled in the art. A non-limiting example is the application of a phosphate coat to the substrate. In another example, steel products not subject to massive corrosion attacks can be processed by coil coating without further pretreatment. In the case of higher humidity and climatic stress, electrogalvanized or hot-dip galvanized material can be employed.

In an embodiment of the invention, the present method includes applying a primer layer, before the coating composition is applied to the metal strip. As a non-limiting example, the primer layer can include a primer composition selected from epoxy primers, urethane based primers, polyester based primers, and water-reducible acrylic primers. Non-limiting examples of suitable primers that can be used include those disclosed in U.S. Patent No. 6,413,642, the pertinent portions of which are herein incorporated by reference.

When a primer layer is applied, the dry film thickness of the primer layer can be at least 1, in some cases at least 2.5, and in other cases at least 5 µm. Also, the dry film thickness of the primer layer can be up to 35, in some cases up to 30, in other cases up to 25, and in some situations up to 20 µm. The dry film thickness of the primer layer on the metal strip can vary between any of the values recited above.

The primer layer can be applied by spraying, dipping, knife coating, roller coating or brushing.

In an embodiment of the present invention, the coating composition forms a coating layer on the metal strip, over the primer layer, having a dry film thickness of from at least 1, in some cases at least 2.5, and in other cases at least 5 µm. Also, the dry film thickness of the coating layer can be up to 35, in some cases up to 30, in other cases up to 25, and in some situations up to 20 µm. The dry film thickness of the coating layer of the present coating composition on the metal strip can vary between any of the values recited above.

The coating composition can be applied by spraying, dipping, knife coating, roller coating or brushing, and subsequent baking.

During the baking step, the coating composition is cured. The curing can take place at a temperature of at least 150°, in some cases at least 175°, and in other cases at least 200°C. Also, the curing can take place at a temperature of up to 400°, in some cases up to 350°, and in other cases up to 300°C. The cure temperature will depend on a number of factors including the actual coating composition as well as the speed of the coil and the length of time for cure temperature exposure. The cure temperature of the coating composition can vary between any of the values recited above.

Further, curing of the coating composition takes place in at least 20, in some cases at least 25, and in other cases at least 30 seconds. Also, curing can take place in more than 150 seconds, in some cases up to 150 seconds, in other cases up to 125 seconds, in some situations up to 100 seconds and in other situations up to 50 seconds. The cure time will depend on a number of factors including the actual coating composition as well as the temperature of cure. The cure time of the coating composition can vary between any of the values recited above.

The method of the present invention provides coatings that form strong bonds with the surface of a primed metal strip. As a non-limiting example, when the present method is used the peel strength of a dry film of the coating composition is typically at least 2102 newton/meter (N/m) (12 lb/in) and in some cases at least 2452 (N/m) (14 lb/in). Also, the peel strength of a dry film of the coating composition can be greater than 6129 N/m (35 lb/in), in many cases up to 6129 N/m (35 lb/in), in some cases up to 5255 N/m (30 lb/in) and in some cases up to 4378 N/m (25 lb/in). The peel strength is measured in accordance with the ASTM D429 Method B 90° stripping test. The peel strength of the dry film of the coating composition will vary depending on the actual coating composition as well as the nature of the metal and/or primer. The peel strength can vary between any of the values recited above.

The present invention also provides for metal substrates coated according to the above-described method as well as articles that include the metal substrates.

Embodiments of the present invention also provide for an article that includes a first metal substrate and a second metal substrate, both prepared according to the above-described method, positioned such that coated surfaces of each substrate are parallel to and opposite each other, where a reaction injection molding (RIM) composition is placed there between by a RIM process.

The aqueous based coating composition of the invention can act as a bond enhancer for RIM compositions applied over coating layers of the composition.

Thus, embodiments of the invention are directed to article as shown in FIG. 1, where metal strips 10 are coil coated with the above described coating composition to form a coating film 12 on a surface of each of metal strips 10. RIM composition 14 is applied such that it is positioned between the coil coated film 12 on each metal strip 10.

Any suitable RIM composition can be used in this embodiment. Suitable RIM compositions include, as a non-limiting example, those disclosed in U.S. Patent No. 6,649,667, the pertinent portions of which are herein incorporated by reference.

In a particular embodiment, the RIM composition can include a foam obtained by:
a) mixing (1) an isocyantate-reactive component comprising:
   i) from 5 to 80% by weight, based on the total weight of the
      isocyanate-reactive component, of one or more isocyanate-reactive materials having a functionality of isocyanate reactive groups of at least 1 and a number average molecular weight of from 400 to 10,000;
      ii) a chain extender or crosslinking agent;
      iii) a blowing agent such as water or other blowing agent(s) known in the art;
      iv) a catalyst; and
      v) optionally; flame retardants, pigments, dyes, fillers, surfactants, flow aides, and combinations thereof; with
   (2) an organic polyisocyanate in an amount such that the equivalent ratio of isocyanate groups to isocyanate reactive groups is from 0.8:1 to 1.3:1 and
b) introducing the mixture from a) into a space between the first metal substrate and the second metal substrate.

The foam obtained from the RIM composition can be a closed-cell foam or an open-cell foam.

Any suitable blowing agent can be used in iii). Non-limiting examples of suitable blowing agent include water, as indicated; halogenated hydrocarbons and low boiling hydrocarbons such as tricholoromonofluoromethane, dichloromethane, trichloromethane, dichloromonofluoromethane, chloromethane, 1,1-dichloro-1-fluoroethane, 1,1,2-trichloro-1,2,2-trifluoroethane, tetrafluoroethanes, petafluorobutanes, pentafluoropropanes, hexafluorobutanes, pentane, (n-, iso- and cylopentane) hexane; p-toluene sulfonyl hydrazide; sodium bicarbonate; 2,2'-azobisisobutyronitrile; azodicarbonamide; 4,4'-oxy-bis(benzenesulfonyl hydrazide); dinitrosopentamethylene-tetramine; air; nitrogen; carbon dioxide; argon; and combinations thereof. In an embodiment of the invention, water is the primary blowing agent.

The present invention is more particularly described in the following examples, which are intended to be illustrative only, since numerous modifications and variations therein will be apparent to those skilled in the art. Unless otherwise specified, all parts and percentages are by weight.

### EXAMPLES

### Example 1

A coating composition as in the present invention was prepared by combining the ingredients listed below in a mixing vessel at ambient conditions.

| | |
|---|---|
| Polyol (component a)¹ | 240.0g |
| Catalyst² | 2.2g |
| Flow control additive³ | 1.1g |
| Blocked polyisocyanate (component b)⁴ | 395.7g |

| | |
|---|---|
| ¹ Hydroxyl-functional water-borne resin, BAYHYDROL® VP LS 2239, Bayer Polymers LLC, Pittsburgh, PA | |
| ² FASCAT® 4224, Atofina Chemicals, Inc., Philadelphia, PA | |
| ³ Silicone, BAYSILONE® OL 44, Lanxess., Pittsburgh, PA | |
| ⁴ BAYHYDUR® BL VP LS 2240, Bayer Polymers LLC, Pittsburgh, PA | |

### Example 2 (comparative)

A coating composition was prepared by combining the ingredients listed below in a mixing vessel at ambient conditions. This coating composition is a type typically used in non-coil applications due to its poor blocking resistance.

| | |
|---|---|
| Fully reacted polyurethane dispersion⁵ | 634.0g |
| Flow control additive³ | 3.2g |
| γ-aminopropyltriethoxysilane⁶ | 13.0g |

| | |
|---|---|
| ⁵ BAYHYDROL® 140 A Q, Bayer Polymers LLC, Pittsburgh, PA | |
| ³ Silicone, BAYSILONE® OL 44, Lanxess, Pittsburgh, PA | |
| ⁶ SILQUEST® A-1100, GE Specialty Materials, Wilton, CT | |

### Example 3 (blocking resistance)

Aluminum panels primed on both sides using an epoxy-based primer, and on side B, a white top coat and strippable coating applied, were obtained from Centria International. On side A, a coating composition (from example 1 or example 2) was applied over the primer, and allowed to cure for 40 seconds at 271 °C.

A first group of panels (Group 1 using the coating from example 1) and a second group of panels (Group 2 using the coating from example 2) were tested according to ASTM D 3003-94 (4-6 panels in each group) for blocking resistance against side B. The panels were subjected to pressure using a mechanical vice and temperature conditions for the times listed below. The panels involved were then cooled and evaluated on the basis of the value scale, from 0 to 10, described below, where the process for removal of the panels was evaluated. The panels were put into contact side A facing Side B.

### Test conditions:

Temperature: 47°C.
Pressure: 7.03 Kg/cm²
Exposure time: 18 hrs.

### Value Scale:

- 10: the panels are separated without the assistance of the operator at room temperature;
- 8: the operator can remove the panels with a minimum effort;
- 6: the operator can remove the panels with average effort;
- 4: the operator must use great strength to separate the panels;
- 2: the panels can be separated as in No. 4; remarkable coating transfer from one panel to the other;
- 0: the panels cannot be separated; complete transfer of the coating from one panel to the other.

The results are outlined below:

| | |
|---|---|
| Group I | 10 |
| Group 2 | 2 |

The coating composition of example 2 exhibited poor blocking resistance while the coating composition of example 1 exhibited excellent blocking resistance.

### Example 4 (blocking resistance)

Aluminum panels primed on both sides using an epoxy-based primer as in example 3 were used. A first group of panels (Group 1 using the coating from example 1) and a second group of panels (Group 2 using the coating from example 2) were tested (4-6 panels in each group) and were subjected to the evaluation described in example 3, except that blocking resistance against a panel side with only an epoxy primer coating was evaluated.

The results are outlined below:

| | |
|---|---|
| Group I | 8 |
| Group 2 | 6 |

### Example 5

Aluminum panels primed on both sides using an epoxy-based primer as in example 3 were used. On some panels, a coating was applied on side A with the coating composition from example 1 over the primer. On side B, no additional coating was applied.

A reaction injection molding (RIM) composition, as described in Example 1 of U.S. Patent No. 6,649,667 was applied over side A. The peel strength (average and peak) was determined according to ASTM D429, method B.

| Binder Composition | Peel Strength (N/m and [lb/in.]) | |
|---|---|---|
| | Average | Peek |
| none | 1155 [6.6] | 1943 [11.1] |
| Example 1 | 2590 [14.8] | 3798 [21.7] |

The examples demonstrate the adhesion improvement when the coating composition of the present invention is used.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A method of coil coating for coating a metal strip comprising applying to the metal strip a coating composition comprising a coating containing
a) a polyol component, which is soluble or dispersible in water; and
b) a blocked polyisocyanate component, which is soluble or dispersible in water.

2. The method according to Claim 1, wherein the polyol in a) comprises the reaction product of
a polyisocyanate component containing 50 to 100 wt. % of a polyisocyanate selected from the group consisting of 4,4'-diisocyanatocyclohexylmethane (HMDI), hexamethylene diisocyanate (HDI), 1-isocyanato-3,3,5-trimethyl-5-isocyanatomethyl-cyclohexane (IPDI), 2,4- and/or 2,6-diisocyanatotoluene (TDI), 1-methyl-2,4-diisocyanatocyclo-hexane, 1-methyl-2,6-diisocyanatocyclohexane and 4,4'-diisocyanatodiphenyl-methane (MDI), and combinations thereof;
a polyol component containing one or more polyether polyols and having an OH number of 25 to 350 mg KOH/g solids; and
an isocyanate-reactive component containing at least one group capable of salt formation.

3. The method according to Claim 2, wherein the polyisocyanate comprises 4,4'-diisocyanatodicyclohexylmethane,

4. The method according to Claim 1, wherein the blocked polyisocyanate in b) comprises the reaction product of a polyisocyanate having an isocyanurate group content of 5 to 30 wt. %, a reversible, monofunctional blocking agent for isocyanate groups, a nonionic hydrophilic component and a stabilizing component which has 1 to 2 hydrazide groups and a molecular weight of 70 to 300.

5. The method according to Claim 1, wherein the equivalent ratio of blocked isocyanate groups of component b) to hydroxyl groups of component a) is from 0.8:1 to 3:1.

6. The method according to Claim 1, wherein the coating composition further comprises a catalyst.

7. The method according to Claim 6, wherein the catalyst includes one or more catalysts selected from the group consisting of tertiary amines, tin(II) octoate, dibutyltin oxide, and dibutyltin dilaurate.

8. The method according to Claim 1, wherein the coating composition further comprises a flow control additive.

9. The method according to Claim 8, wherein the flow control additive includes one or more flow control additives selected from the group consisting of polyacrylic esters, non-ionic fluorinated alkyl ester surfactants, non-ionic alkylarylpolyether alcohols, and silicones.

10. The method according to Claim 1, wherein the binder comprises a polyol component, which is the reaction product of
A1 ) 20 to 60 wt. % of a polyisocyanate component containing 50 to 100 wt. % of 4,4'-diisocyanatodicyclohexylmethane and 0 to 50 wt. % of other organic polyisocyanates having a molecular weight of 140 to 1500,
B1) 20 to 60 wt. % of a polyol component containing one or more polyether polyols and having an OH number of 25 to 350 mg KOH/g solids,
C1) 2 to 12 wt. % of an anionic or potential anionic component containing one or more compounds having at least one isocyanate-reactive group and at least one group capable of salt formation, which may optionally be present in at least partially neutralized form,
D1) 0 to 12 wt. % of a nonionic hydrophilic component containing one or more compounds which are mono-or difunctional for purposes of the isocyanate addition reaction and have at least one lateral or terminal hydrophilic polyether chain,
E1) 0 to 15 wt. % of one or more polyhydric alcohols having 2 to 4 hydroxyl groups and a molecular weight of 62 to 250,
F1) 0 to 15 wt. % of one or more (cyclo)aliphatic polyamines having 2 to 4 amino groups and a molecular weight of 60 to 300,
G1) 0 to 30 wt. % of one or more (cyclo)aliphatic polyamino /hydroxyl compounds having a total of 2 to 4 hydroxyl and amino groups and a molecular weight of 61 to 300 and
H1) 0 to 15 wt. % of one or more stabilizing components which are mono- or difunctional for purposes of the isocyanate addition reaction and have 1 to 2 hydrazide groups and a molecular weight of 70 to 300,
wherein the percentages of A1) to H1) add up to 100.

11. The method according to Claim 1, wherein the binder comprises a blocked polyisocyanate component, which is the reaction product of
A2) 40 to 80 wt. % of a polyisocyanate having an isocyanurate group content (calculated as C₃N₃O₃; molecular weight=126) of 2 to 30 wt. % and prepared from one or more diisocyanates having a molecular weight of 140 to 350 with
B2) 5 to 30 wt. % of one or more reversible blocking agents for isocyanate groups which are monofunctional for purposes of the isocyanate addition reaction,
C2) 0 to 15 wt. % of an anionic or potential anionic component containing one or more compounds having at least one isocyanate-reactive group and at least one group capable of salt formation, which may optionally be present in at least partially neutralized form,
D2) 5 to 30 wt. % of a nonionic hydrophilic component containing one or more compounds which are mono-or difunctional for purposes of the isocyanate addition reaction and have at least one lateral or terminal hydrophilic polyether chain,
E2) 0 to 15 wt. % of one or more polyhydric alcohols having 2 to 4 hydroxyl groups and a molecular weight of 62 to 250,
F2) 0 to 15 wt. % of one or more (cyclo)aliphatic polyamines having 2 to 4 amino groups and a molecular weight of 60 to 300 and
G2) 0.5 to 15 wt. % of one or more stabilizing components which are mono- or difunctional for purposes of the isocyanate addition reaction and have 1 to 2 hydrazide groups and a molecular weight of 70 to 300.

12. The method according to Claim 1 further comprising applying, before the coating composition is applied to the metal strip, a primer layer comprising a primer composition selected from the group consisting of epoxy primers, urethane based primers, polyester based primers, and water-reducible acrylic primers.

13. The method according to Claim 1, wherein the coating composition forms a coating layer having a dry film thickness of from 1 to 35 µm.

14. The method according to Claim 12, wherein the dry film thickness of the primer layer is from 1 to 35 µm.

15. The method according to Claim 1, wherein the peel strength of a dry film of the coating composition is from 2102 newton/meter (N/m) (12 lb/in) to 6130 N/m (35 lb/in) when measured in accordance with the ASTM D429 Method B 90° stripping test.

16. The method according to Claim 1, wherein the metal comprises aluminum, zinc, iron, steel, and/or nickel.

17. The method according to Claim 1, wherein the coating composition is cured at a temperature of from 150° to 400°C for from 20 to 150 seconds.

18. A metal substrate coated according to the method of Claim 1.

19. The metal substrate according to Claim 18, wherein the metal comprises aluminum, zinc, iron, steel, and/or nickel.

20. An article comprising the metal substrate of Claim 18.

21. An article comprising a first metal substrate according to Claim 18, and a second metal substrate according to Claim 18, positioned such that the coated surfaces of each substrate are parallel to and opposite each other, and a reaction injection molding (RIM) composition is placed there between by the RIM process.

22. The article according to Claim 21, wherein the RIM composition comprises a foam obtained by a RIM process comprising:
c) mixing
(1) an isocyantate-reactive component comprising:
i) from 5 to 80% by weight, based on the total weight of the isocyanate-reactive component, of one or more isocyanate-reactive materials having a functionality of isocyanate reactive groups of at least 1 and a number average molecular weight of from 400 to 10,000;
ii) a chain extender or crosslinking agent;
iii) a blowing agent;
iv) a catalyst; and
v) optionally; flame retardants, pigments, dyes, fillers, surfactants, flow aides, and combinations thereof; with
(2) an organic polyisocyanate in an amount such that the equivalent ratio of isocyanate groups to isocyanate reactive groups is from 0.8:1 to 1.3:1 and
d) introducing the mixture from a) into a space between the first metal substrate the second metal substrate.

23. The article according to Claim 22, wherein the blowing agent includes one or more blowing agents selected from the group consisting of water, halogenated hydrocarbons, low boiling hydrocarbons, p-toluene sulfonyl hydrazide, sodium bicarbonate, 2,2'-azobisisobutyronitrile, azodicarbonamide, 4,4'-oxy-bis(benzenesulfonyl hydrazide), dinitrosopentamethylene-tetramine, air, nitrogen, carbon dioxide, and argon.
